# DEMANDE DE BREVET EUROPEEN

(11) **EP 3 730 376 A1**
(43) Date de publication de la demande: **28.10.2020**
(21) Numéro de dépôt: 20171104.1
(22) Date de dépôt: 23.04.2020
(51) Int. Cl.: B60W 60/00, B60W 50/00

(54) **DISPOSITIF DE PILOTAGE POUR VÉHICULE AUTOMOBILE, VÉHICULE AUTOMOBILE, PROCÉDÉ DE COMMANDE D'UN TEL VÉHICULE AUTOMOBILE ET PROGRAMME D'ORDINATEUR ASSOCIÉS**

(30) Priorité: 25.04.2019 FR 1904364
(71) Demandeur: Transdev Group, 92130 Issy les Moulineaux (FR)
(72) Inventeur: DARNAUD, Thomas, 78000 VERSAILLES (FR)
(74) Mandataire: Lavoix

(57) **Abrégé**

L'invention concerne un dispositif de pilotage (40) destiné à être embarqué dans un véhicule automobile (10), notamment dans un véhicule automobile autonome (10), comportant :
- un module de commande configuré pour piloter le véhicule (10) en fonction d'une loi de commande définissant une valeur maximale de vitesse du véhicule (10) et une valeur maximale de variation de vitesse du véhicule (10),
- un module de détection configuré pour déterminer une valeur d'au moins un paramètre d'occupation du véhicule (10), et
- un module de calcul configuré pour modifier, en fonction au moins de la valeur du paramètre d'occupation déterminée, au moins une valeur parmi la valeur maximale de vitesse du véhicule (10) et la valeur maximale de variation de vitesse du véhicule (10).

## Description

La présente invention concerne un dispositif de pilotage pour un véhicule automobile ainsi qu'un véhicule automobile équipé d'un tel dispositif. La présente invention concerne également un procédé de pilotage d'un tel véhicule automobile. La présente invention concerne aussi un programme d'ordinateur comprenant des instructions logicielles qui mettent en œuvre un tel procédé lorsqu'elles sont exécutées par un ordinateur.

L'invention concerne le domaine des véhicules automobiles autonomes, en particulier des véhicules automobiles autonomes ayant un niveau d'automatisation (de l'anglais *level of automation*) supérieur ou égal à 3 selon le barème de l'Organisation Internationale des Constructeurs Automobiles (OICA). Ces véhicules autonomes sont en général commandés par un module de pilotage qui contrôle le déplacement du véhicule le long de voies de circulation selon une loi de pilotage qui permet la prise en compte des caractéristiques des voies de circulation et des véhicules ou obstacles qui sont présents sur celles-ci. C'est selon cette loi de pilotage que le module de pilotage calcule la trajectoire, l'accélération et la vitesse du véhicule autonome et commande son freinage en fonction des circonstances.

La loi de pilotage est prévue pour assurer la sécurité des occupants du véhicule autonome ainsi que des personnes ou des autres véhicules qui occupent les voies de circulation lorsque le véhicule autonome les parcourt, notamment pour éviter des collisions entre le véhicule autonome et des obstacles présents sur les voies de circulation tels que des piétons ou d'autres véhicules. La loi de pilotage prend donc en compte un grand nombre de paramètres de l'environnement du véhicule.

Toutefois, le pilotage des véhicules autonomes peut encore être amélioré. En particulier, les lois de pilotage des véhicules autonomes existants ne sont pas adaptées à toutes les circonstances d'utilisation de tels véhicules. En particulier, une loi de pilotage qui permet une sécurité suffisante en toutes circonstances n'offre pas nécessairement un confort optimum aux passagers du véhicule autonome. En outre, il reste encore souhaitable d'optimiser la consommation énergétique du véhicule autonome.

Le but de l'invention est alors de proposer un véhicule autonome qui présente un pilotage amélioré, permettant notamment une amélioration du confort des passagers et/ou une diminution de la consommation énergétique du véhicule.

A cet effet, l'invention a pour objet un dispositif de pilotage destiné à être embarqué dans un véhicule automobile, notamment dans un véhicule automobile autonome, comportant :
- un module de commande configuré pour piloter le véhicule en fonction d'une loi de commande définissant une valeur maximale de vitesse du véhicule et une valeur maximale de variation de vitesse du véhicule,
- un module de détection configuré pour déterminer une valeur d'au moins un paramètre d'occupation du véhicule, et
- un module de calcul configuré pour modifier, en fonction au moins de la valeur du paramètre d'occupation déterminée, au moins une valeur parmi la valeur maximale de vitesse du véhicule et la valeur maximale de variation de vitesse du véhicule.

Ainsi, le dispositif de pilotage selon l'invention permet d'adapter le comportement du véhicule en fonction de son occupation. Cela permet d'améliorer le confort perçu par les passagers du véhicule autonome, et de réduire la consommation énergétique du véhicule.

Suivant d'autres aspects avantageux mais non obligatoires de l'invention, le dispositif de pilotage comprend une ou plusieurs des caractéristiques suivantes, prises isolément ou selon toutes les combinaisons techniquement possibles :
- au moins un paramètre d'occupation est choisi parmi le groupe consistant en :
   - un nombre total de passagers à l'intérieur du véhicule,
   - un nombre de passager(s) présent(s) à un emplacement prédéterminé dans le véhicule,
   - un nombre de passager(s) appartenant à une catégorie prédéterminée de passagers présent(s) dans le véhicule, et
   - un nombre d'objet(s) appartenant à une catégorie d'objets prédéterminée présent(s) dans le véhicule.
- le module de détection est configuré pour détecter au moins un accessoire d'un passager du véhicule et pour identifier, en fonction de l'accessoire détecté, une catégorie du passager, de préférence parmi un ensemble de catégories prédéterminées de passager(s).
- le module de calcul est configuré pour diminuer l'une au moins de la valeur maximale de vitesse du véhicule et de la valeur maximale de variation de vitesse du véhicule lorsque le module de détection détermine que l'une au moins des propriétés suivantes est vérifiée :
   - au moins un passager appartenant à une catégorie présélectionnée est présent dans le véhicule, ou
   - au moins un passager est présent à un emplacement prédéterminé dans le véhicule.
- le module de calcul est configuré pour augmenter l'une au moins de la valeur maximale de vitesse du véhicule et de la valeur maximale de variation de vitesse du véhicule lorsque le module de détection détermine qu'un nombre de passagers dans le véhicule est égal à zéro.
- la catégorie de passagers prédéterminée est choisie parmi le groupe consistant en :
   - une catégorie de personnes à mobilité réduite,
   - une catégorie de personnes âgées,
   - une catégorie d'enfants,
   - une catégorie de personnes accompagnées d'objets encombrants, et
   - une catégorie de femmes enceintes.
- le module de détection est configuré pour détecter une entrée dans le véhicule d'un passager et pour incrémenter un nombre total de passagers dans le véhicule, respectivement configuré pour détecter une sortie hors du véhicule d'un passager et pour décrémenter le nombre total de passagers dans le véhicule.
- le véhicule est propre à circuler le long de voie(s) de circulation, le module de détection étant configuré pour détecter des personnes occupant des emplacements prédéterminés des voie(s) de circulation et pour déterminer une valeur d'au moins un paramètre d'occupation à partir de la détection effectuée.
- le véhicule est configuré pour se déplacer sur des voies de circulation comportant un ensemble d'emplacements d'intérêt prédéterminés, la valeur maximale de vitesse du véhicule et/ou la valeur maximale de variation de vitesse du véhicule étant calculée par le module de calcul en fonction de l'emplacement d'intérêt lorsque le véhicule circule sur l'emplacement d'intérêt.

L'invention a également pour objet un véhicule, notamment un véhicule automobile autonome, comportant un dispositif de pilotage tel que défini précédemment.

L'invention a également pour objet un procédé de commande d'un véhicule automobile autonome comportant un module électronique de commande pilotage configuré pour piloter le véhicule en fonction d'une loi de commande définissant une valeur maximale de vitesse du véhicule et une valeur maximale de variation de vitesse du véhicule, le procédé comprenant des étapes de :
- détermination, par un module électronique de détection, d'une valeur d'au moins un paramètre d'occupation du véhicule, et
- modification, par un module électronique de calcul, d'au moins une valeur parmi la valeur maximale de vitesse du véhicule et la valeur maximale de variation de vitesse du véhicule en fonction au moins de la valeur du paramètre d'occupation déterminée.

L'invention a également pour objet un programme d'ordinateur comportant des instructions logicielles qui, lorsqu'elles sont exécutées par un ordinateur, mettent en oeuvre un procédé de commande tel que défini ci-dessus.

Des caractéristiques et avantages de l'invention apparaîtront plus clairement à la lecture de la description qui va suivre, donnée uniquement à titre d'exemple non limitatif, et faite en référence aux dessins annexés, sur lesquels :
- [Fig 1] la figure 1 est une représentation schématique d'un véhicule automobile selon l'invention, comportant un module de contrôle et un compartiment passager,
- [Fig 2] la figure 2 est une représentation schématique du véhicule de la figure 1, montrant plus en détails le compartiment passager,
- [Fig 3] la figure 3 est une représentation schématique du module de contrôle de la figure 1, et
- [Fig 4] la figure 4 est un ordinogramme des étapes d'un procédé de commande mis en oeuvre par le module de contrôle de la figure 1.

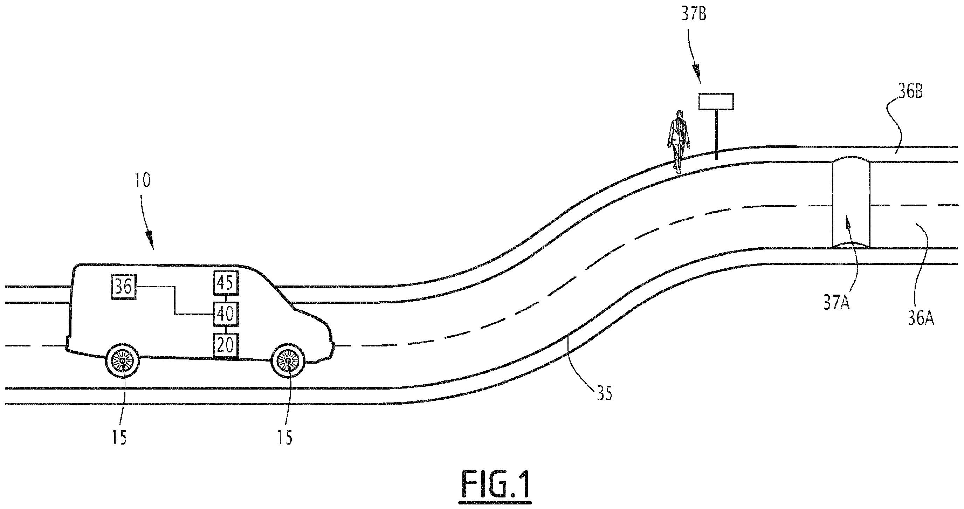

Un véhicule 10 est représenté sur la figure 1.

Le véhicule 10 est par exemple un véhicule automobile, en particulier un bus. Toutefois, d'autres types de véhicules automobiles sont susceptibles d'être envisagés, par exemple des véhicules individuels tels qu'une voiture.

Comme visible sur la figure 1, chaque véhicule 10 comprend, de manière connue, une carrosserie 12, des roues 15, un moteur 20 relié mécaniquement via une chaîne de transmission (non représentée) aux roues 15 pour l'entraînement desdites roues 15 en rotation autour de leur axe, un système de direction (non représenté), adapté pour agir sur les roues 15 du véhicule 10 de manière à modifier l'orientation de sa trajectoire, et un système de freinage (non représenté), adapté pour exercer une force de freinage sur les roues 15 du véhicule 10.

Chaque véhicule automobile 10 est typiquement constitué par un véhicule à traction et/ou propulsion électrique. A cet effet, le moteur 20 est constitué par un moteur électrique, et le véhicule 10 comprend une batterie électrique (non représentée) raccordée électriquement au moteur 20 pour l'alimentation du moteur 20 en électricité.

Le véhicule 10 comporte au moins un compartiment passager 25 et un capteur 30 d'occupation du compartiment passager 25.

Chaque véhicule 10 est configuré pour se déplacer sur une ou des voie(s) de circulation 35. La direction de déplacement du véhicule 10 définit un axe longitudinal A-A'. Le véhicule 10 s'étend le long de l'axe longitudinal A-A'.

Chaque véhicule automobile 10 est par exemple un véhicule autonome. A cet effet, le véhicule automobile 10 comprend un dispositif électronique de conduite autonome 40 adapté pour piloter le véhicule 10 sur la voie de circulation 35 de manière autonome en recevant des informations sur l'environnement du véhicule 10 par l'intermédiaire d'au moins un capteur 45, également appelé capteur d'environnement, et en agissant sur le moteur 20, le système de direction et le système de freinage, de manière à modifier la vitesse, l'accélération et la trajectoire du véhicule 10 en réaction aux informations reçues. Chaque capteur d'environnement 45 est par exemple une caméra, un capteur de température, un capteur de pression, un capteur d'humidité ou un lidar. Chaque capteur d'environnement 45 est relié au dispositif électronique de conduite autonome 40.

Par exemple, le dispositif électronique de conduite autonome 40 est configuré pour commander un freinage du véhicule 10 lorsqu'un capteur d'environnement 45 détecte la présence d'un autre véhicule devant le véhicule 10 considéré, une distance entre les deux véhicules étant inférieure ou égale à un seuil prédéterminé, ce seuil étant notamment fonction de la vitesse du véhicule 10.

Chaque véhicule automobile autonome 10 présente de préférence un niveau d'automatisation supérieur ou égal à 3 selon le barème de l'Organisation Internationale des Constructeurs Automobiles (OICA). Le niveau d'automatisation est alors égal à 3, c'est-à-dire une automatisation conditionnelle (de l'anglais Conditional Automation), ou égal à 4, c'est-à-dire une automatisation élevée (de l'anglais High Automation), ou encore égal à 5, c'est-à-dire une automatisation complète (de l'anglais Full Automation).

Selon le barème de l'OICA, le niveau 3 d'automatisation conditionnelle correspond à un niveau pour lequel le conducteur n'a pas besoin de surveiller en permanence la conduite dynamique, ni l'environnement de conduite, tout en devant toujours être en mesure de reprendre le contrôle du véhicule automobile autonome 10. Selon ce niveau 3, un système de gestion de la conduite autonome, embarqué à bord du véhicule automobile autonome 10, effectue alors la conduite longitudinale et latérale dans un cas d'utilisation défini et est apte à reconnaître ses limites de performance pour demander alors au conducteur de reprendre la conduite dynamique avec une marge de temps suffisante.

Le niveau 4 d'automatisation élevée correspond à un niveau pour lequel le conducteur n'est pas requis dans un cas d'utilisation défini. Selon ce niveau 4, le système de gestion de la conduite autonome, embarquée à bord du véhicule automobile autonome 10, exécute alors la conduite dynamique latérale et longitudinale dans toutes les situations de ce cas d'utilisation défini.

Le niveau 5 d'automatisation complète correspond enfin à un niveau pour lequel le système de gestion de la conduite autonome, embarqué à bord du véhicule automobile autonome 10, effectue la conduite dynamique latérale et longitudinale dans toutes les situations rencontrées par le véhicule automobile autonome 10, pendant tout son trajet. Aucun conducteur n'est alors requis.

Les voies de circulations 35 comportent, par exemple, une chaussée 36A sur laquelle le véhicule 10 est prévu pour circuler, et un ou plusieurs trottoirs 36B prévus pour permettre la circulation de piétons.

Les voies de circulation 35 comportent, notamment, au moins un emplacement d'intérêt 37A, 37B prédéterminé.

Chaque emplacement d'intérêt 37A, 37B est un emplacement que le dispositif électronique de conduite autonome 40 est configuré pour prendre en compte spécifiquement lors du pilotage du véhicule 10.

Au moins un emplacement d'intérêt est, par exemple, un ralentisseur 37A configuré pour inciter ou contraindre les véhicules circulant sur la chaussée à ralentir à l'approche du ralentisseur. Le ralentisseur 37A est, notamment, un dos d'âne, c'est-à-dire un ralentisseur 37A comportant au moins une portion surélevée par rapport à la surface environnante de la chaussée.

En variante ou en complément, au moins un emplacement d'intérêt est un rond-point, un carrefour, ou encore un virage.

En variante ou en complément, au moins un emplacement d'intérêt est une zone des voies de circulation 35 prévue pour accueillir au moins un piéton et pour permettre au véhicule 10 de s'arrêter de manière à ce que le piéton pénètre dans le véhicule 10 ou à ce que le piéton en descende. Par exemple, l'emplacement est un arrêt 37B. L'arrêt 37B est, notamment, matérialisé par un panneau du trottoir 36B, et/ou par un marquage au sol du trottoir 36B ou de la chaussée 36A.

En variante, la zone est une zone dépourvue de marquage mais dans laquelle un piéton a indiqué au dispositif électronique de conduite autonome 40 que le piéton attend que le véhicule 10 s'arrête pour permettre au piéton de monter dans le véhicule 10 ou d'en descendre. Par exemple, le piéton a transmis des coordonnées de la zone au dispositif électronique de conduite autonome 40 via une liaison de données radiofréquence, en particulier via un terminal mobile tel qu'un téléphone portable. Les coordonnées comportent, par exemple, des coordonnées GPS, ou encore une référence de la zone propre à identifier la zone parmi un ensemble de zones prédéterminées mémorisées dans le dispositif électronique de conduite autonome 40.

En variante, au moins un emplacement d'intérêt est une intersection entre des voies de circulation 35 comportant un feu tricolore ou un panneau STOP, une intersection entre les voies de circulation 35 et une voie ferrée, une zone comportant un passage piéton traversant les voies de circulation ou encore une portion des voies de circulation 35 comportant une limitation de vitesse par rapport aux autres portions des voies de circulation 35.

Chaque compartiment passager 25 est propre à accueillir au moins un passager 50A, 50B, 50C, 50D, par exemple une pluralité de passagers 50A, 50B, 50C, 50D.

Selon l'exemple représenté sur la figure 1, le véhicule 10 comporte un unique compartiment passager 25. En variante, le véhicule 10 comporte une pluralité de compartiments passagers 25 distincts les uns des autres.

Chaque compartiment passager 25 comporte, par exemple, au moins un équipement 55A, 55B de service au(x) passager(s) 50A, 50B, 50C, 50D.

Chaque équipement de service est un équipement de service au(x) passager(s) 50A, 50B, 50C, 50D d'un compartiment passager 25 correspondant. Par exemple, au moins un équipement de service au(x) passager(s) est un équipement utilisable par un passager du compartiment passager 25. En variante, au moins un équipement de service est un équipement prévu pour interagir avec un passager 50A, 50B, 50C, 50D du compartiment passager 25.

Selon l'exemple de la figure 1, chaque compartiment passager 25 comporte une pluralité d'équipements de service au(x) passager(s).

Chaque équipement de service au(x) passager(s) est, par exemple, choisi parmi le groupe consistant en :
- un dispositif d'affichage 55A,
- un dispositif acoustique 55B,
- un équipement de régulation de température,
- une prise d'alimentation électrique, et
- une lampe.

Il est à noter que d'autres types d'équipements de service aux passagers sont susceptibles d'être envisagés.

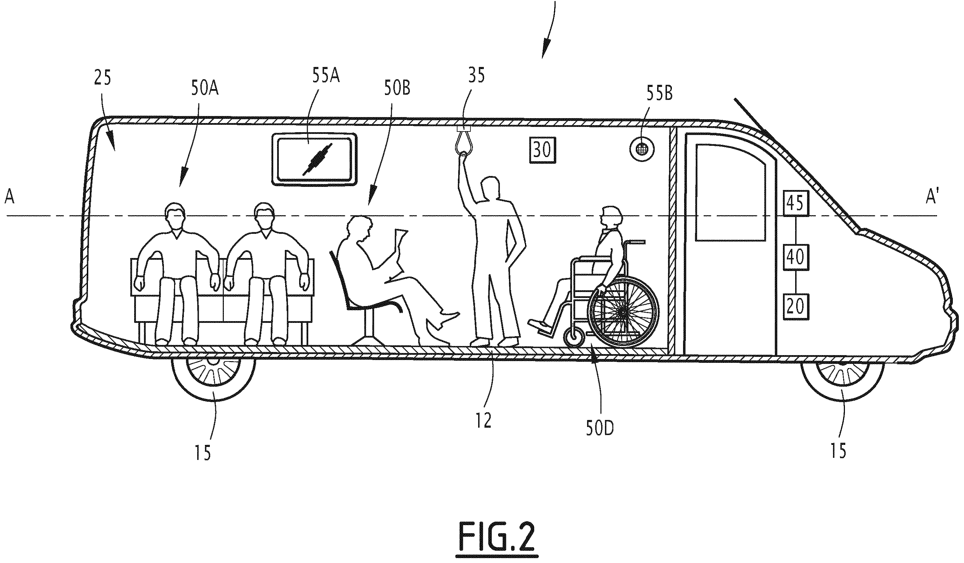

Sur la figure 2, un dispositif d'affichage 55A et un dispositif acoustique 55B sont représentés, mais des modes de réalisation dans lesquels d'autres équipements de service aux passagers 50A, 50B, 50C, 50D sont présents dans le compartiment passager 25 sont également envisageables. En particulier, il est à noter que d'autres types d'équipements de service aux passagers que les dispositifs d'affichage 55A, les dispositifs acoustiques 55B, les équipements de régulation de température, les prises d'alimentation électrique, et les lampes sont susceptibles d'être présents dans le compartiment passager 25.

Chaque capteur d'occupation 30 est propre à fournir au moins une information relative à la présence d'un ou plusieurs passager(s) 50A, 50B, 50C, 50D à l'intérieur du véhicule 10. Chaque capteur d'occupation 30 est, par exemple, choisi parmi le groupe consistant en : un capteur d'image(s), notamment un capteur stéréoscopique, un capteur de présence, un capteur sonore, un capteur infrarouge, un capteur de poids et un capteur de température.

En variante, au moins un capteur d'occupation 30 est configuré pour fournir au moins une information relative à la présence d'une ou plusieurs personne(s) occupant un ou plusieurs emplacements d'intérêt, notamment des zones 37B des voies de circulation 35. Par exemple, le capteur d'occupation 30 est configuré pour détecter la présence d'une ou plusieurs personnes occupant une zone 37B, notamment une portion d'un trottoir 36B comprise dans une zone 37B. Dans ce cas, un même capteur est susceptible de jouer le rôle de capteur d'occupation 30 et de capteur d'environnement 45, réduisant ainsi la complexité du véhicule 10.

En variante ou en complément, au moins un capteur d'occupation 30 est configuré pour détecter une montée et/ou une descente d'un ou plusieurs passager(s) 50A, 50B, 50C, 50D dans ou hors du véhicule 10.

Chaque capteur d'occupation 30 est relié au dispositif électronique de conduite autonome 40.

Le dispositif électronique de conduite autonome 40 comporte au moins un module de commande 60, un module de détection 65, un module de calcul 70 et une unité de traitement d'informations 75 comportant un processeur 80 et une mémoire 85.

Le module de commande 60 est configuré pour piloter le véhicule 10 sur les voies de circulation 35 en fonction des informations fournies par le ou les capteur(s) d'environnement 45. En particulier, le module de commande 60 est configuré pour piloter le véhicule 10 selon une loi de commande.

La loi de commande est propre à permettre au module de commande 60 de déterminer, en fonction des informations fournies par le ou les capteur(s) d'environnement 45, une trajectoire, une vitesse et/ou une accélération du véhicule 10 sur les voies de circulation 35.

La loi de commande définit une valeur maximale de vitesse et au moins une valeur maximale de variation de vitesse du véhicule 10.

La valeur maximale de vitesse est, notamment, une valeur de vitesse que le véhicule 10 ne doit pas dépasser sur la portion ou l'emplacement 37A des voies de circulation 35 sur lequel le véhicule 10 est en circulation.

Il est entendu par « variation de vitesse » une variation de la vitesse du véhicule 10 en fonction du temps, c'est-à-dire une dérivée de la vitesse par rapport au temps. La valeur maximale de variation est, par exemple, une valeur maximale d'accélération, c'est-à-dire d'une variation positive de la vitesse, ou d'une valeur maximale de décélération, c'est-à-dire d'une variation négative de la vitesse.

Selon un mode de mise en œuvre, la loi de commande définit une valeur maximale de vitesse, une valeur maximale d'accélération et une valeur maximale de décélération.

Chaque valeur maximale est, par exemple, définie en valeur absolue.

En variante ou en complément, la loi de commande est, en outre, propre à déterminer une plage de valeurs permises pour la vitesse, l'accélération et/ou la décélération du véhicule 10 lorsque le véhicule 10 circule sur un emplacement d'intérêt.

En particulier, la loi de commande est propre à déterminer une plage de valeurs permises pour la vitesse, l'accélération et/ou la décélération du véhicule 10 lorsque le véhicule 10 circule sur un emplacement d'intérêt choisi parmi le groupe constitué de : les ralentisseurs, les ronds-points, les intersections comportant un feu tricolore et les intersections comportant un panneau STOP.

Le module de détection 65 est configuré pour déterminer une valeur d'au moins un paramètre d'occupation du véhicule 10. En particulier, le module de détection 65 est configuré pour déterminer la valeur de chaque paramètre d'occupation du véhicule 10 en fonction des informations transmises par le ou les capteur(s) d'occupation 30.

Chaque paramètre d'occupation est, par exemple, choisi parmi le groupe consistant en :
- un nombre total de passager(s) 50A, 50B, 50C, 50D à l'intérieur du véhicule 10,
- un nombre de passager(s) 50A, 50B, 50C, 50D appartenant à une catégorie prédéterminée de passagers 50A, 50B, 50C, 50D présent(s) dans le véhicule 10,
- un nombre de passagers 50A, 50B, 50C, 50D présent(s) dans un emplacement prédéterminé dans le véhicule 10, et
- un nombre d'objet(s) appartenant à une catégorie d'objets prédéterminée présent(s) dans le véhicule 10.

Par exemple, le module de détection 65 est configuré pour détecter une entrée d'un passager 50A, 50B, 50C, 50D dans le véhicule 10 et pour incrémenter en réponse le nombre total de passagers 50A, 50B, 50C, 50D dans le véhicule 10. En outre, le module de détection 65 est configuré pour détecter une sortie d'un passager 50A, 50B, 50C, 50D hors du véhicule 10 et pour décrémenter en réponse le nombre total de passagers 50A, 50B, 50C, 50D dans le véhicule 10.

Chaque catégorie de passagers 50A, 50B, 50C, 50D est, par exemple, choisie parmi le groupe consistant en :
- les enfants,
- les personnes âgées,
- les personnes debout,
- les personnes assises,
- les personnes accompagnées d'objets encombrants,
- les femmes enceintes,
- les personnes à mobilité réduite, et
- les personnes ayant acheté un titre de transport appartenant à une catégorie prédéterminée de titres de transport.

Il est à noter que d'autres catégories de passagers 50A, 50B, 50C, 50D sont également susceptibles d'être envisagées.

Par exemple, le module de détection 65 est configuré pour détecter la présence d'un ou plusieurs passager(s) 50A, 50B, 50C, 50D dans le véhicule 10, notamment dans un compartiment passager 35, et pour identifier une ou plusieurs catégories du ou de chaque passager(s) 50A, 50B, 50C, 50D en fonction des informations fournies par le ou les capteur(s) d'occupation 30.

En variante, le module de détection 65 est configuré pour détecter la présence d'une ou plusieurs personne(s) à un emplacement prédéterminé des voie(s) de circulation et à identifier une ou plusieurs catégories associées à la ou les personne(s) à partir des informations fournies par un capteur d'environnement 45, et à déterminer les valeurs d'un paramètre d'occupation en fonction de la ou des catégorie(s) identifiées lorsque la personne pénètre dans le véhicule 10.

Par exemple, au moins une catégorie, notamment la catégorie des personnes à mobilité réduite, est associée à au moins un accessoire. Le module de détection 65 est configuré pour détecter un tel accessoire lorsqu'un passager 50A, 50B, 50C, 50D est équipé de cet accessoire et pour classifier en conséquence le passager 50A, 50B, 50C, 50D dans la catégorie associée à cet accessoire. Ainsi, la catégorie du passager 50A, 50B, 50C, 50D est identifiée.

Dans un mode de réalisation avantageux, lorsqu'au moins l'un des capteurs d'occupation 30 dans le véhicule 10 est un capteur d'image(s), le module de détection 65 est configuré pour classifier le ou les passager(s) 50A, 50B, 50C, 50D par un traitement d'image(s) issue(s) du capteur d'image(s) associé à une méthode d'apprentissage automatique (de l'anglais *machine learning*).

La méthode d'apprentissage automatique se base, par exemple, sur un modèle utilisant une approche statistique afin de permettre d'améliorer les performances de cette méthode à résoudre des tâches sans être explicitement programmé pour chacune de ces tâches. L'apprentissage automatique comporte deux phases. La première phase consiste à définir un modèle à partir de données présentes dans une base de données, appelées observations. L'estimation du modèle consiste en particulier à reconnaître la présence d'un ou plusieurs objets dans une image. Cette phase dite d'apprentissage est généralement réalisée préalablement à l'utilisation pratique du modèle. La seconde phase correspond à l'utilisation du modèle : le modèle étant défini, de nouvelles images peuvent alors être soumises au modèle afin d'obtenir le ou les objets détectés sur lesdites images.

En particulier, la méthode d'apprentissage automatique est propre à détecter des accessoires associés au passager 50A, 50B, 50C, 50D et caractéristiques d'une catégorie du passager 50A, 50B, 50C, 50D, tels qu'une canne ou un fauteuil roulant associés à une mobilité réduite du passager 50A, 50B, 50C, 50D.

Le modèle d'apprentissage automatique comporte par exemple la mise en oeuvre d'un réseau de neurones. Un réseau de neurones est en général composé d'une succession de couches dont chacune prend ses entrées sur les sorties de la précédente. Chaque couche est composée d'une pluralité de neurones, prenant leurs entrées sur les neurones de la couche précédente. À chaque synapse entre neurones est associée un poids synaptique, de sorte que les entrées reçues par un neurone sont multipliées par ce poids, puis additionnées par ledit neurone. Le réseau de neurones est optimisé grâce aux ajustements des différents poids synaptiques pendant la phase d'apprentissage en fonction des images présentes dans la base de données initiale.

Selon un mode de réalisation, le module de détection 65 est configuré pour détecter des personnes occupant des emplacements prédéterminés des voies de circulation 35, notamment des zones 37B, et pour déterminer la valeur d'au moins un paramètre d'occupation à partir de ladite détection. Par exemple, le module de détection 65 est configuré pour détecter l'entrée ou la sortie d'un passager du véhicule 10 à la suite de la détection d'une personne occupant ladite zone 37B.

Notamment, le module de détection 65 est configuré pour détecter une personne occupant l'emplacement prédéterminé avant que le véhicule 10 n'atteigne l'emplacement et s'y arrête, et pour incrémenter le nombre total de passager(s) dans le véhicule 10 en fonction du nombre de personnes détectées dans l'emplacement. En outre, le module de détection 65 est configuré pour détecter une personne occupant l'emplacement prédéterminé après que le véhicule 10 se soit arrêté dans ledit emplacement, et pour décrémenter le nombre total de passager(s) dans le véhicule 10 en fonction du nombre de personnes détectées dans l'emplacement après l'arrêt du véhicule 10.

Les catégorie(s) d'objets prédéterminées comprennent, par exemple, les objets encombrants tels que les valises, les poussettes, les sacs et/ou les vélos.

Les objets encombrants sont, par exemple, identifiés par analyse d'image.

En variante ou en complément, au moins une catégorie d'objets est une catégorie d'objets lourds. Les objets lourds sont par exemple identifiés par analyse d'image.

Le nombre de passager(s) 50A, 50B, 50C, 50D présent(s) dans un emplacement prédéterminé du véhicule 10 comprend, par exemple, un nombre de passagers 50C, 50D présents dans un emplacement dépourvu de siège. Une allée entre deux rangées de sièges, ou encore un espace libre prévu pour être occupé par une personne en fauteuil roulant ou par une poussette sont des exemples d'emplacements dépourvus de sièges.

En variante ou en complément, le nombre de passager(s) 50A, 50B, 50C, 50D présent(s) dans un emplacement prédéterminé du véhicule 10 comprend, par exemple, un nombre de passagers 50A assis sur des sièges perpendiculaires à l'axe longitudinal A-A' du véhicule 10, ou encore un nombre de passagers 50B assis sur des sièges parallèles à l'axe longitudinal A-A'. Il est entendu par « siège perpendiculaire » (respectivement « siège parallèle ») à l'axe longitudinal A-A' un siège prévu pour qu'un passager 50A, 50B assis sur le siège fasse face à une paroi latérale du véhicule 10 (respectivement à un avant ou à un arrière du véhicule 10).

Le module de calcul 70 est configuré pour modifier au moins une valeur parmi la valeur maximale de vitesse et la ou les valeurs maximales de variation de vitesse de la loi de commande en fonction de la valeur d'au moins un paramètre d'occupation déterminée par le module de détection 65.

Par exemple, le module de calcul 70 est configuré pour diminuer au moins une valeur parmi la valeur maximale de vitesse et la ou les valeurs maximales de variation de vitesse en fonction de la valeur déterminée.

En particulier, le module de calcul 70 est configuré pour modifier la valeur maximale de vitesse entre une première valeur maximale de vitesse et une deuxième valeur maximale de vitesse strictement inférieure à la première valeur maximale de vitesse en fonction de la valeur d'au moins un paramètre d'occupation.

La première valeur maximale de vitesse est, par exemple, comprise entre 85 kilomètres par heure (km/h) et 90 km/h lorsque le véhicule 10 circule sur une portion des voies de circulation 35 dans laquelle la vitesse est limitée à 90 km/h.

La première valeur maximale de vitesse est, par exemple, fonction d'un emplacement d'intérêt sur lequel le véhicule 10 circule. Par exemple, la première valeur maximale de vitesse est strictement supérieure lorsque le véhicule 10 circule sur une portion rectiligne des voies de circulation 35 que lorsque le véhicule 10 circule sur un emplacement d'intérêt choisi parmi le groupe formé de : un rond-point, un virage, une intersection comportant un feu tricolore ou un panneau stop, un ralentisseur, une intersection entre les voies de circulation 35 et une voie ferrée, une zone comportant un passage piéton.

La première valeur maximale de vitesse est, par exemple, choisie pour limiter la consommation énergétique du véhicule 10 et/ou pour limiter le temps de trajet du véhicule 10.

La deuxième valeur maximale de vitesse est, par exemple, comprise entre 90% et 95 % de la première valeur maximale de vitesse.

La deuxième valeur maximale de vitesse est, par exemple, comprise entre 80 km/h et 85 km/h lorsque le véhicule 10 circule sur une portion des voies de circulation 35 dans laquelle la vitesse est limitée à 90 km/h.

La deuxième valeur maximale de vitesse et/ou de variation de vitesse est, par exemple, fonction d'un emplacement d'intérêt 37A sur lequel le véhicule 10 circule. Par exemple, la deuxième valeur maximale de vitesse et/ou de variation de vitesse est strictement supérieure lorsque le véhicule 10 circule sur une portion rectiligne des voies de circulation 35 à la deuxième valeur maximale de vitesse et/ou de variation de vitesse lorsque le véhicule 10 circule sur un emplacement d'intérêt 37A choisi parmi le groupe formé de : un rond-point, un virage, une intersection comportant un feu tricolore ou un panneau stop, un ralentisseur, une intersection entre les voies de circulation 35 et une voie ferrée, une zone comportant un passage piéton.

En outre, le module de calcul 70 est configuré pour modifier une valeur maximale de variation de vitesse entre une première valeur maximale de variation de vitesse et une deuxième valeur maximale de variation de vitesse strictement inférieure à la première valeur maximale de variation de vitesse en fonction de la valeur d'au moins un paramètre d'occupation.

La première valeur maximale de variation de vitesse est, par exemple, choisie pour limiter la consommation énergétique du véhicule 10 et/ou pour limiter le temps de trajet du véhicule 10.

Le module de calcul 70 est, par exemple, configuré pour, lorsque le nombre de passagers 50A, 50B, 50C, 50D est égal à zéro,
- fixer la valeur maximale de vitesse égale à la première valeur maximale de vitesse et/ou
- fixer chaque valeur maximale de variation de vitesse égale à la première valeur maximale de variation de vitesse correspondante.

La première valeur maximale de variation de vitesse est susceptible de varier selon les circonstances.

La deuxième valeur maximale de variation de vitesse est, par exemple, comprise, en valeur absolue, entre 80 % et 95 % de la première valeur maximale de variation de vitesse.

Selon un mode de réalisation, le module de calcul 70 est configuré pour modifier une valeur maximale d'accélération entre une première valeur maximale d'accélération et une deuxième valeur maximale d'accélération strictement inférieure à la première valeur maximale d'accélération en fonction de la valeur d'au moins un paramètre d'occupation.

Le module de calcul 70 est, en outre, configuré pour modifier une valeur maximale de décélération entre une première valeur maximale de décélération et une deuxième valeur maximale de décélération strictement inférieure à la première valeur maximale de décélération en fonction de la valeur d'au moins un paramètre d'occupation.

En particulier, le module de calcul 70 est configuré pour rendre l'une au moins de la valeur maximale de vitesse, de la valeur maximale d'accélération et de la valeur maximale de décélération égale à la deuxième valeur maximale correspondante lorsque le module de détection 65 détermine que l'une au moins des propriétés suivantes est vérifiée :
- au moins un passager 50A, 50B, 50C, 50D appartenant à une catégorie présélectionnée est présent dans le véhicule,
- au moins un passager 50A, 50B, 50C, 50D est présent à un emplacement prédéterminé dans le véhicule 10, ou
- le nombre de passagers 50A, 50B, 50C, 50D dans le véhicule 10 est égal à zéro.

Par exemple, le module de calcul 70 est configuré pour rendre l'une au moins de la valeur maximale de vitesse, de la valeur maximale d'accélération et de la valeur maximale de décélération égale à la deuxième valeur maximale correspondante lorsque le module de détection 65 détermine qu'au moins un passager 50A, 50B, 50C, 50D est classifié dans l'une des catégories appartenant au groupe formé de : les personnes à mobilité réduite, les personnes âgées, les enfants, les femmes enceintes, les personnes accompagnées d'objets encombrants, les personnes debout.

En particulier, le module de calcul 70 est configuré pour rendre chacune de la valeur maximale de vitesse et de la valeur maximale de décélération égale à la deuxième valeur maximale correspondante lorsque le module de détection 65 détermine qu'au moins un passager 50A, 50B, 50C, 50D est classifié dans l'une des catégories appartenant au groupe formé de : les personnes à mobilité réduite, les personnes âgées, les enfants, les femmes enceintes, les personnes accompagnées d'objets encombrants, les personnes debout.

En variante ou en complément, le module de calcul 70 est configuré pour rendre l'une au moins de la valeur maximale de vitesse, de la valeur maximale d'accélération et de la valeur maximale de décélération égale respectivement à une troisième valeur maximale de vitesse, une troisième valeur maximale d'accélération ou une troisième valeur maximale de décélération lorsque le module de détection 65 détermine que le véhicule 10 comporte un nombre de passagers strictement supérieur à zéro, notamment qu'aucun passager n'est classifié dans une catégorie prédéterminée telle qu'une des catégories appartenant au groupe formé de : les personnes à mobilité réduite, les personnes âgées, les enfants, les femmes enceintes, les personnes accompagnées d'objets encombrants, les personnes debout.

Par exemple, le module de calcul 70 est configuré pour rendre l'une au moins de la valeur maximale de vitesse, de la valeur maximale d'accélération et de la valeur maximale de décélération égale à la troisième valeur maximale de vitesse, d'accélération ou de décélération correspondante.

La troisième valeur maximale de vitesse est comprise strictement entre la première valeur maximale de vitesse et la deuxième valeur maximale de vitesse.

La troisième valeur maximale d'accélération est comprise strictement entre la première valeur maximale d'accélération et la deuxième valeur maximale d'accélération. La troisième valeur maximale de décélération est comprise strictement entre la première valeur maximale de décélération et la deuxième valeur maximale de décélération.

En variante ou en complément, le module de calcul 70 est, en outre, configuré pour modifier au moins une première plage de valeurs parmi une plage de valeurs permises pour la vitesse, l'accélération et/ou la décélération du véhicule 10 lorsque le véhicule 10 circule sur un emplacement d'intérêt, notamment pour remplacer la première plage de valeurs par une deuxième plage de valeurs dont les valeurs sont différentes des valeurs de la première plage de valeurs. En particulier, les valeurs de la deuxième plage de valeurs sont strictement inférieures aux valeurs de la première plage de valeurs.

L'emplacement particulier est, par exemple, un rond-point, un virage, une intersection comportant un feu tricolore ou un panneau stop, un ralentisseur, une intersection entre les voies de circulation 35 et une voie ferrée, une zone comportant un passage piéton.

En variante ou en complément, le module de calcul est, en outre, configuré pour générer une commande de désactivation à destination d'un équipement 55A, 55B de service au(x) passagers 50A, 50B, 50C, 50D lorsque le module de détection 65 détermine que le nombre total de passagers 50A, 50B, 50C, 50D est égal à zéro.

Par exemple, au moins un équipement choisi parmi un dispositif d'affichage 55A, un dispositif acoustique 55B, un équipement de régulation de température, une prise d'alimentation électrique, et une lampe est désactivé par le module de calcul 70. En particulier, une alimentation électrique de l'équipement est interrompue.

En variante ou en complément, le module de calcul est, en outre, configuré pour générer une commande de désactivation à destination d'une prise d'alimentation électrique lorsque le module de détection 65 détermine qu'au moins un enfant est présent dans le véhicule 10.

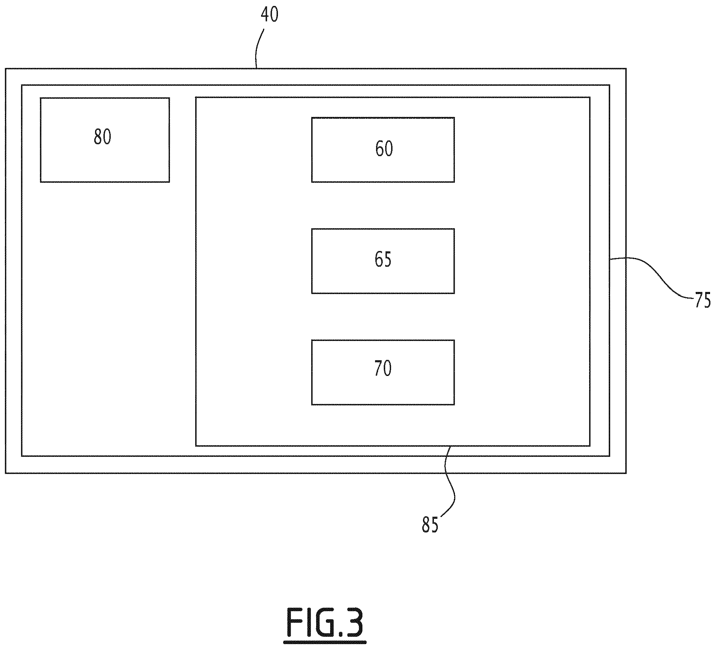

Comme représenté sur la figure 3, le module de commande 60, le module de détection 65 et le module de calcul 70 sont réalisés chacun sous forme d'un logiciel, ou d'une brique logicielle, exécutables par le processeur 80. La mémoire 85 est alors apte à stocker un logiciel de commande, un logiciel de détection et un logiciel de calcul. Le processeur 80 est alors apte à exécuter chacun des logiciels.

En variante non représentée, le module de commande 60, le module de détection 65 et le module de calcul 70 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific Integrated Circuit).*

Lorsque le dispositif électronique de conduite autonome 40 est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique. Sur le support lisible est alors mémorisé un programme d'ordinateur comportant des instructions logicielles.

Il est à noter que, bien que le véhicule 10 ait été décrit ci-dessus dans le cas où le module de détection 65, le module de calcul 70 et le ou les capteurs d'occupation 30 sont embarqués dans le véhicule 10, des modes de réalisation dans lesquels l'un au moins de ces éléments n'est pas embarqué, par exemple dans lesquels l'un au moins de ces éléments est positionné le long de voies de circulation 35, sont également envisageables.

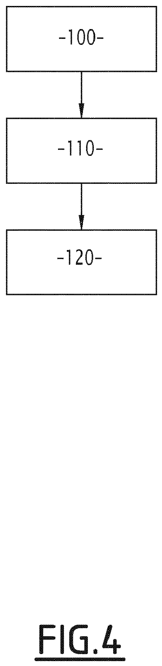

Le fonctionnement du véhicule 10 va maintenant être décrit à l'aide de la figure 4 représentant un ordinogramme des étapes d'un procédé, selon l'invention, de commande du véhicule 10, le procédé étant mis en oeuvre par le dispositif électronique de conduite autonome 40.

Le procédé comprend une étape 100 d'acquisition, une étape 110 de détermination et une étape 120 de calcul.

Lors de l'étape d'acquisition 100, des informations relatives à la présence d'un ou plusieurs passager(s) 50A, 50B, 50C, 50D à l'intérieur du véhicule 10 sont transmises par au moins un capteur d'occupation 30 et/ou au moins un capteur d'environnement 45 au module de détection 65.

Par exemple, un capteur d'occupation 30 acquiert une ou plusieurs image(s) d'un compartiment passager 35 et transmet la ou les image(s) au module de détection 65.

En variante ou en complément, un capteur d'environnement 45 acquiert une ou plusieurs image(s) d'un emplacement d'intérêt des voies de circulation et transmet la ou les image(s) au module de détection 65 lorsque le véhicule 10 s'arrête à l'emplacement d'intérêt pour laisser monter ou descendre au moins un passager 50A, 50B, 50C, 50D.

En complément facultatif, un capteur 30 d'occupation détecte la montée et/ou la descente du ou des passager(s) et transmet au module de détection 65 une information relative au nombre de passager(s) étant monté(s) dans le véhicule 10 et/ou étant descendu(s) du véhicule 10.

Lors de l'étape de détection 110, le module de détection 65 détermine la valeur d'au moins un paramètre d'occupation du véhicule à partir de la ou des informations reçues.

Par exemple, le module de détection 65 détermine un nombre total de passager(s) 50A, 50B, 50C, 50D dans le véhicule 10.

En variante ou en complément, le module de détection 65 classifie au moins un passager 50A, 50B, 50C, 50D dans au moins une catégorie de passagers 50A, 50B, 50C, 50D. Dans ce cas, le module de détection 65 détermine, par exemple, pour au moins une catégorie de passager(s) 50A, 50B, 50C, 50D, un nombre de passager(s) appartenant à cette catégorie de passagers 50A, 50B, 50C, 50D.

En variante ou en complément, le module de détection 65 détermine un nombre de passager(s) 50A, 50B, 50C, 50D présent(s) dans un emplacement prédéterminé du véhicule 10, ou encore un nombre d'objet(s) appartenant à une ou plusieurs catégorie(s) d'objet(s) prédéterminée(s) présents dans le véhicule 10.

Par exemple, dans le cas représenté sur la figure 2, le module de détection 65 détermine que :
- le nombre total de passagers 50A, 50B, 50C, 50D est égal à cinq ;
- trois passagers 50A, 50B sont classifiés dans la catégorie des personnes assises,
- un passager 50C est classifié dans la catégorie des personnes debout,
- un passager 50D est classifié dans la catégorie des personnes à mobilité réduite,
- deux passagers 50C, 50D sont présents dans un emplacement dépourvu de siège,
- deux passagers 50A sont assis sur des sièges perpendiculaires à l'axe longitudinal A-A' du véhicule 10, et
- un passager 50B est assis sur un siège parallèle à l'axe longitudinal A-A'.

Lors de l'étape de calcul 120, le module de calcul 70 modifie la loi de commande en fonction au moins de la valeur du paramètre d'occupation déterminée.

En particulier, le module de calcul 70 modifie au moins une valeur parmi la valeur maximale de vitesse, la valeur maximale d'accélération et/ou la valeur maximale de décélération du véhicule 10.

Par exemple, puisqu'au moins un passager 50D est classifié dans la catégorie des personnes à mobilité réduite le module de calcul 70 rend la valeur maximale de vitesse égale à la deuxième valeur maximale de vitesse. Le module de calcul 70 rend, en outre, la valeur maximale de décélération égale à la deuxième valeur maximale de décélération.

Par exemple, si l'on suppose que le véhicule 10 était vide avant l'étape 100 d'acquisition et que les passagers 50A à 50D sont montés dans le véhicule 10 juste avant l'étape d'acquisition, les valeurs maximales de vitesse, d'accélération et de décélération étaient alors fixées par le module de calcul 70, antérieurement à l'étape d'acquisition 100, comme étant égales respectivement à la première valeur maximale de vitesse, à la première valeur maximale d'accélération et à la première valeur maximale de décélération.

Lors de l'étape de calcul 70, le module de calcul 70 diminue la valeur maximale de vitesse depuis la première valeur maximale de vitesse jusqu'à la deuxième valeur maximale de vitesse. Le module de calcul 70 diminue, en outre, la valeur maximale de décélération depuis la première valeur maximale de décélération jusqu'à la deuxième valeur maximale de décélération.

Si aucun passager 50A, 50B, 50C, 50D n'était classifié dans l'une des catégories appartenant au groupe formé de : les personnes à mobilité réduite, les personnes âgées, les enfants, les femmes enceintes, les personnes accompagnées d'objets encombrants, les personnes debout, notamment si la personne à mobilité réduite 50D et la personne debout 50C n'étaient pas présentes, lors de l'étape de calcul 70, le module de calcul 70 diminuerait alors au moins une valeur maximale parmi les valeurs maximales de vitesse, d'accélération et de décélération depuis la première valeur maximale jusqu'à la troisième valeur maximale correspondante.

En complément facultatif, le module de calcul 70 commande la désactivation, notamment l'interruption d'une alimentation électrique à destination de, d'un équipement 55A, 55B de service au(x) passager(s) 50A, 50B, 50C, 50D.

Il est à noter que, lorsque les valeurs maximales de vitesse, d'accélération et/ou de décélération sont égales aux deuxièmes ou troisièmes valeurs maximales correspondantes, et que le module de détection 65 détecte lors de l'étape de détection 110 qu'aucun passager 50A à 50D n'est présent dans le véhicule 10, le module de calcul 70 augmente alors au moins une parmi les valeurs maximales de vitesse, d'accélération et/ou de décélération pour la rendre égale à la première valeur maximale correspondante lors de l'étape de calcul 120.

Grâce à l'invention, le comportement du véhicule est adapté en fonction de son occupation. Cela permet d'améliorer le confort perçu par les passagers du véhicule autonome, et de réduire la consommation énergétique du véhicule.

Le nombre de passagers présents à un emplacement prédéterminé dans le véhicule et/ou le nombre d'objets ou de passagers appartenant à une catégorie d'objets ou de passagers prédéterminée sont des paramètres d'occupation dont la prise en compte permet d'améliorer le confort des passagers. Le nombre total de passagers est un paramètre d'occupation dont la prise en compte permet de diminuer la consommation énergétique du véhicule.

La diminution de la valeur maximale de vitesse et/ou de la ou les valeurs maximale(s) de variation de vitesse en cas de présence d'un ou plusieurs passagers appartenant à des catégories prédéterminées et/ou présents à des emplacements prédéterminés permet d'améliorer le confort perçu par ces passagers.

Au contraire, l'augmentation de la ou les valeurs maximale(s) de variation de vitesse en cas d'absence de passager dans le véhicule 10 permet de diminuer la consommation énergétique du véhicule. En effet, si la valeur maximale de variation de vitesse est faible, les freinages et accélérations doivent être mis en œuvre très tôt, ce qui implique que, dans de nombreux cas, ils sont mis en œuvre par précaution alors qu'il aurait finalement été possible de conserver une vitesse constante du fait de l'évolution ultérieure de la situation. Ces freinages et accélérations entraînent alors une augmentation inutile de la consommation énergétique du véhicule.

De manière générale, plus la vitesse est constante, moins la consommation énergétique du véhicule est élevée. Le fait d'attendre avant de déclencher une variation de vitesse, ce qui est rendu possible par une valeur élevée de variation de vitesse, permet donc de limiter la consommation énergétique.

De manière générale, la prise en compte de paramètres d'occupation pour modifier les valeurs maximales de vitesse et/ou de variation de vitesse permet donc à la fois d'améliorer le confort des passagers et d'optimiser la consommation énergétique du véhicule 10.

En outre, lorsque la valeur maximale de vitesse lorsque le véhicule 10 circule sur un emplacement prédéterminé est réduite, notamment lorsque cet emplacement prédéterminé est un virage ou un ralentisseur, le confort des passagers est amélioré.

La détection d'une montée ou sortie d'un passager et la modification en conséquence du nombre total de passagers est susceptible d'être effectuée à l'aide de capteurs 30 simples et ne nécessite pas un traitement complexe des informations fournies par les capteurs. La complexité du dispositif 40, du ou des capteurs 30 et plus généralement du véhicule 10 est alors réduite.

Lorsque le module de détection 65 détermine des valeurs de paramètres d'occupation à partir de la détection de personnes présentes à des emplacements d'intérêt des voies de circulation, la classification des passagers en catégories est susceptible d'être effectuée sur la base d'informations, notamment d'images, fournies par le ou les capteurs d'environnement 45 ou par un ou plusieurs capteurs disposés le long des voies de circulation 35, ce qui fait que le véhicule 10 requiert moins de capteurs d'environnement 30 et est donc simplifié.
Lorsque les modules de calcul 70 et de détection 75 sont embarqués dans le véhicule 10, le véhicule 10 est moins sensible à une éventuelle rupture des communications avec l'extérieur du véhicule 10, et son fonctionnement est rendu plus fiable.

## Revendications

1. Dispositif de pilotage (40) destiné à être embarqué dans un véhicule automobile (10), notamment dans un véhicule automobile autonome (10), comportant :
- un module de commande (60) configuré pour piloter le véhicule (10) en fonction d'une loi de commande définissant une valeur maximale de vitesse du véhicule (10) et une valeur maximale de variation de vitesse du véhicule (10),
- un module de détection (65) configuré pour déterminer une valeur d'au moins un paramètre d'occupation du véhicule (10), et
- un module de calcul (70) configuré pour modifier, en fonction au moins de la valeur du paramètre d'occupation déterminée, au moins une valeur parmi la valeur maximale de vitesse du véhicule (10) et la valeur maximale de variation de vitesse du véhicule (10).

2. Dispositif de pilotage selon la revendication 1, dans lequel au moins un paramètre d'occupation est choisi parmi le groupe consistant en :
- un nombre total de passagers (50A, 50B, 50C, 50D) à l'intérieur du véhicule (10),
- un nombre de passager(s) (50A, 50B, 50C, 50D) présent(s) à un emplacement prédéterminé dans le véhicule (10),
- un nombre de passager(s) (50A, 50B, 50C, 50D) appartenant à une catégorie prédéterminée de passagers (50A, 50B, 50C, 50D) présent(s) dans le véhicule (10), et
- un nombre d'objet(s) appartenant à une catégorie d'objets prédéterminée présent(s) dans le véhicule (10).

3. Dispositif de pilotage selon la revendication 2, dans lequel le module de détection (65) est configuré pour détecter au moins un accessoire d'un passager (50A, 50B, 50C, 50D) du véhicule (10) et pour identifier, en fonction de l'accessoire détecté, une catégorie du passager (50A, 50B, 50C, 50D),
de préférence parmi un ensemble de catégories prédéterminées de passager(s) (50A, 50B, 50C, 50D).

4. Dispositif de pilotage selon la revendication 2 ou 3, dans lequel le module de calcul (70) est configuré pour diminuer l'une au moins de la valeur maximale de vitesse du véhicule (10) et de la valeur maximale de variation de vitesse (10) du véhicule lorsque le module de détection (65) détermine que l'une au moins des propriétés suivantes est vérifiée :
- au moins un passager (50A, 50B, 50C, 50D) appartenant à une catégorie présélectionnée est présent dans le véhicule, ou
- au moins un passager (50A, 50B, 50C, 50D) est présent à un emplacement prédéterminé dans le véhicule.

5. Dispositif de pilotage selon la revendication 2 ou 3, dans lequel le module de calcul (70) est configuré pour augmenter l'une au moins de la valeur maximale de vitesse du véhicule (10) et de la valeur maximale de variation de vitesse (10) du véhicule lorsque le module de détection (65) détermine qu'un nombre de passagers dans le véhicule (10) est égal à zéro.

6. Dispositif de pilotage selon l'une quelconque des revendications 2 à 5, dans lequel au moins un paramètre d'occupation est un nombre de passager(s) (50A, 50B, 50C, 50D) appartenant à une catégorie prédéterminée de passagers (50A, 50B, 50C, 50D) présent(s) dans le véhicule (10), la catégorie de passagers (50A, 50B, 50C, 50D) prédéterminée étant choisie parmi le groupe consistant en :
- une catégorie de personnes à mobilité réduite (50D),
- une catégorie de personnes âgées,
- une catégorie d'enfants,
- une catégorie de personnes accompagnées d'objets encombrants, et
- une catégorie de femmes enceintes.

7. Dispositif de pilotage selon l'une quelconque des revendications 1 à 6, dans lequel le module de détection (65) est configuré pour détecter une entrée dans le véhicule (10) d'un passager (50A, 50B, 50C, 50D) et pour incrémenter un nombre total de passagers (50A, 50B, 50C, 50D) dans le véhicule (10), respectivement configuré pour détecter une sortie hors du véhicule (10) d'un passager (50A, 50B, 50C, 50D) et pour décrémenter le nombre total de passagers (50A, 50B, 50C, 50D) dans le véhicule (10).

8. Dispositif de pilotage selon l'une quelconque des revendications 1 à 7, dans lequel le véhicule (10) est propre à circuler le long de voie(s) de circulation (35), le module de détection (65) étant configuré pour détecter des personnes occupant des emplacements prédéterminés (37B) des voie(s) de circulation (35) et pour déterminer une valeur d'au moins un paramètre d'occupation à partir de la détection effectuée.

9. Dispositif de pilotage selon l'une quelconque des revendications 1 à 9, dans lequel le véhicule (10) est configuré pour se déplacer sur des voies de circulation (35) comportant un ensemble d'emplacements d'intérêt (37A) prédéterminés, la valeur maximale de vitesse du véhicule (10) et/ou la valeur maximale de variation de vitesse du véhicule (10) étant calculée par le module de calcul (70) en fonction de l'emplacement d'intérêt (37A) lorsque le véhicule (10) circule sur l'emplacement d'intérêt (37A).

10. Véhicule automobile, notamment un véhicule automobile autonome, comportant un dispositif de pilotage (40) selon l'une quelconque des revendications 1 à 9.

11. Procédé de commande d'un véhicule automobile autonome (10) comportant un module électronique de pilotage (40) configuré pour piloter le véhicule (10) en fonction d'une loi de commande définissant une valeur maximale de vitesse du véhicule (10) et une valeur maximale de variation de vitesse du véhicule (10), le procédé comprenant des étapes de :
- détermination (110), par un module électronique de détection (65), d'une valeur d'au moins un paramètre d'occupation du véhicule (10), et
- modification (120), par un module électronique de calcul (70), d'au moins une valeur parmi la valeur maximale de vitesse du véhicule (10) et la valeur maximale de variation de vitesse du véhicule (10) en fonction au moins de la valeur du paramètre d'occupation déterminée.

12. Programme d'ordinateur comportant des instructions logicielles qui, lorsqu'elles sont exécutées par un ordinateur, mettent en œuvre un procédé selon la revendication 11.
